# EUROPEAN PATENT APPLICATION

(11) **EP 3 799 477 A1**
(43) Date of publication of application: **31.03.2021**
(21) Application number: 20205215.5
(22) Date of filing: 13.07.2016
(51) Int. Cl.: H04W 48/14, H04W 76/19, H04W 36/00

(54) **SYSTEM INFORMATION TRANSMISSION METHOD AND APPARATUS**

(62) Divisional of application: 16908454.8
(71) Applicant: GUANGDONG OPPO MOBILE TELECOMMUNICATIONS CORP., LTD., Wusha, Chang'an Dongguan Guangdong 523860 (CN)
(72) Inventor: TANG, Hai, Dongguan, Guangdong 523860 (CN)
(74) Representative: Manitz Finsterwald Patent- und Rechtsanwaltspartnerschaft mbB

(57) **Abstract**

Disclosed in the present invention are a system information transmission method and apparatus. The method comprises: a terminal requesting system information of a first network side device by means of a dedicated control signal, the system information being system information that the terminal needs to use; and the terminal receiving the system information. In the embodiments of the present invention, a terminal is capable of requesting system information of a network side device by means of a dedicated control signal on the basis of requirements of the terminal, so as to save transmission resources used when transmitting the system information, thereby avoiding waste of transmission resources present in prior art, which is due to a base station transmitting system information by means of a broadcast mode.

## Description

### TECHNICAL FIELD

The disclosure relates to the field of communications, and particularly relates to a method and device for system information transmission.

### BACKGROUND

In an existing Long Term Evolution (LTE) system, system information is sent within a cell regularly via a broadcasting manner. No matter whether a terminal is in a connection state or in an idle state, after establishing downlink synchronization with the cell, the terminal can obtain relevant information of the cell by receiving system information sent by the cell.

However, since the terminal does not need to receive the system information of the cell again after the terminal has acquired the system information of the cell, a method that the cell sends the system information via the broadcasting manner seriously wastes transmission resources.

### SUMMARY

The embodiments of the disclosure provide a method and device for system information transmission, which may save transmission resources used when system information is transmitted.

A first aspect provides a method for system information transmission, which includes: a terminal requests for system information to be used by the terminal from a network device via a dedicated control signaling; and the terminal receives the system information.

In the embodiments of the disclosure, the terminal can request system information of a first network device to the first network device via the dedicated control signaling based on an own requirement, so that transmission resources used when the system information is transmitted are saved and the waste of the transmission resources due to the fact that a base station transmits the system information via a broadcasting manner in the conventional art is prevented.

In combination with the first aspect, in a first possible implementation manner of the first aspect, the network device is a source network device accessed by the terminal, that a terminal requests for system information to be used by the terminal from a network device via a dedicated control signaling includes: the terminal requests for the system information from the source network device via the dedicated control signaling; and that the terminal receives the system information includes: the terminal receives system information, forwarded by the source network device, of a target network device, the target network device being a network device to which the terminal intends to be handed over from the source network device.

In the embodiments of the disclosure, when the terminal is handed over from a second network device to the first network device, it may request the system information of the first network device by sending the dedicated control signaling to the second network device, thereby saving the transmission resources used when the system information is transmitted.

In combination with the first aspect or any possible implementation manner above thereof, in another possible implementation manner of the first aspect, the dedicated control signaling includes a measurement report; the measurement report includes a result of measurement on neighboring cells of the source network device performed by the terminal, and the neighboring cells include a cell of the target network device.

In combination with the first aspect or any possible implementation manner above thereof, in a possible implementation manner of the first aspect, that a terminal requests for system information to be used by the terminal from a network device via a dedicated control signaling includes: the terminal requests for the system information of the network device from the network device via a handover completion message, the handover completion message being further used for indicating that the terminal has been handed over to the network device.

In the embodiments of the disclosure, when the terminal completes the handover from a second network device to the first network device, it may request the system information of the first network device by sending the dedicated control signaling to the first network device, thereby saving the transmission resources used when the system information is transmitted.

In combination with the first aspect or any possible implementation manner above thereof, in a possible implementation manner of the first aspect, that the terminal receives the system information includes: the terminal receives a first reconfiguration message, which carries the system information, from the network device, the first reconfiguration message being further used for indicating the terminal to modify a connection with the network device after the terminal has handed over to the network device.

In the embodiments of the disclosure, the terminal may acquire the system information, requested by the terminal, of the first network device by receiving the first reconfiguration message sent by the first network device, thereby saving the transmission resources used when the system information is transmitted.

In combination with the first aspect or any possible implementation manner above thereof, in a possible implementation manner of the first aspect, that a terminal requests for system information to be used by the terminal from a network device via a dedicated control signaling includes: the system requests for the system information of the network device from the network device via a connection re-establishment request message, the connection re-establishment request message being further used by the terminal for requesting for re-establishing the connection with the network device.

In the embodiments of the disclosure, the terminal requests the system information of the first network device to the first network device via the connection re-establishment request message, thereby saving the transmission resources used when the system information is transmitted.

In combination with the first aspect or any possible implementation manner above thereof, in a possible implementation manner of the first aspect, that the terminal receives the system information includes: the terminal receives a connection re-establishment message, which carries the system information, from the network device, the connection re-establishment message being further used for indicating the terminal to re-establish the connection with the network device.

In the embodiments of the disclosure, the terminal may acquire the system information, requested by the terminal, of the first network device by receiving the connection re-establishment message sent by the first network device, thereby saving the transmission resources used when the system information is transmitted.

In combination with the first aspect or any possible implementation manner above thereof, in a possible implementation manner of the first aspect, that a terminal requests for system information to be used by the terminal from a network device via a dedicated control signaling includes: the system requests for the system information of the network device from the network device via a connection re-establishment completion message, the connection re-establishment completion message being further used for indicating that the terminal has re-established the connection with the network device.

In the embodiments of the disclosure, the terminal requests the system information of the first network device to the first network device via the connection re-establishment completion message, thereby saving the transmission resources used when the system information is transmitted.

In combination with the first aspect or any possible implementation manner above thereof, in a possible implementation manner of the first aspect, that the terminal receives the system information includes: the terminal receives a second reconfiguration message, which carries the system information, from the network device, the second reconfiguration message being further used for indicating the terminal to modify the connection with the network device after the terminal has established the connection with the network device.

In the embodiments of the disclosure, the terminal may acquire the system information, requested by the terminal, of the first network device by receiving the second reconfiguration message sent by the first network device, thereby saving the transmission resources used when the system information is transmitted.

In combination with the first aspect or any possible implementation manner above thereof, in a possible implementation manner of the first aspect, the system information to be used by the terminal includes system information to be updated for the terminal.

A second aspect provides A method for system information transmission, which includes: a network device receives system information which is requested for by a terminal via a dedicated control signaling and to be used by the terminal; and the network device sends the system information to the terminal.

In the embodiments of the disclosure, the terminal can request system information of a first network device to the first network device via the dedicated control signaling based on an own requirement, so that transmission resources used when the system information is transmitted are saved and the waste of the transmission resources due to the fact that a base station transmits the system information via a broadcasting manner in the conventional art is prevented.

In combination with the second aspect, in a possible implementation manner of the second aspect, the network device is a source network device accessed by the terminal; before the network device sends the system information to the terminal, the method further includes: the network device sends the dedicated control signaling to a target network device, the target network device being a network device to which the terminal intends to be handed over; and the network device receives the system information sent by the target network device; and that the network device sends the system information to the terminal includes: the network device sends the system information to the terminal.

In the embodiments of the disclosure, when the terminal is handed over from a second network device to the first network device, it may request the system information of the first network device by sending the dedicated control signaling to the first network device, thereby saving the transmission resources used when the system information is transmitted.

In combination with the second aspect, in a possible implementation manner of the second aspect, the network device is a source network device accessed by the terminal; before the network device sends the system information to the terminal, the method further includes: the network device sends an identifier of the system information to a target network device, the target network device being a network device to which the terminal device intends to be handed over; and the network device receives the system information sent by the target network device, the system information being determined by the network device based on the identifier of the system information, and that the network device sends the system information to the terminal includes: the network device sends the system information to the terminal.

In the embodiments of the disclosure, when the terminal is handed over from the second network device to the first network device, it may request the system information of the first network device by sending the dedicated control signaling to the second network device. Herein, what transferred by the second network device to the first network device may be the identifier, to be used by the terminal, of the system information, so compared with the conventional art, the transmission resources used when the system information is transmitted is saved.

In combination with the second aspect or any possible implementation manner above thereof, in another possible implementation manner of the second aspect, the dedicated control signaling includes a measurement report; the measurement report includes a result of measurement on neighboring cells of the source network device performed by the terminal, and the neighboring cells include a cell of the target network device.

In combination with the second aspect or any possible implementation manner above thereof, in a possible implementation manner of the second aspect, that a network device receives system information which is requested for by a terminal via a dedicated control signaling and to be used by the terminal includes: the network device determines the system information of the network device via a handover completion message sent by the terminal, the handover completion message being further used for indicating that the terminal has been handed over to the network device.

In the embodiments of the disclosure, when the terminal completes the handover from a second network device to the first network device, it may request the system information of the first network device by sending the dedicated control signaling to the second network device, thereby saving the transmission resources used when the system information is transmitted.

In combination with the second aspect or any possible implementation manner above thereof, in a possible implementation manner of the second aspect, that the network device sends the system information to the terminal includes: the network device sends a first reconfiguration message carrying the system information to the terminal, the first reconfiguration message being further used for indicating the terminal to modify a connection with the network device after the terminal has handed over to the network device.

In the embodiments of the disclosure, the terminal may acquire the system information, requested by the terminal, of the first network device by receiving the first reconfiguration message sent by the first network device, thereby saving the transmission resources used when the system information is transmitted.

In combination with the second aspect or any possible implementation manner above thereof, in a possible implementation manner of the second aspect, that a network device receives system information which is requested for by a terminal via a dedicated control signaling and to be used by the terminal includes: the network device determines the system information of the network device via a connection re-establishment request message sent by the terminal, the connection re-establishment request message being further used by the terminal for requesting for re-establishing the connection with the network device.

In the embodiments of the disclosure, the terminal requests the system information of the first network device to the first network device via the connection re-establishment request message, thereby saving the transmission resources used when the system information is transmitted.

In combination with the second aspect or any possible implementation manner above thereof, in a possible implementation manner of the second aspect, that the network device sends the system information to the terminal includes: the network device sends a connection re-establishment message carrying the system information to the terminal, the connection re-establishment message being further used for indicating the terminal to re-establish the connection with the network device.

In the embodiments of the disclosure, the terminal may acquire the system information, requested by the terminal, of the first network device by receiving the connection re-establishment message sent by the first network device, thereby saving the transmission resources used when the system information is transmitted.

In combination with the second aspect or any possible implementation manner above thereof, in a possible implementation manner of the second aspect, that a network device receives system information which is requested for by a terminal via a dedicated control signaling and to be used by the terminal includes: the network device determines the system information of the network device via a connection re-establishment completion message sent by the terminal, the connection re-establishment completion message being further used for indicating that the terminal has re-established the connection with the network device.

In the embodiments of the disclosure, the terminal requests the system information of the first network device to the first network device via the connection re-establishment completion message, thereby saving the transmission resources used when the system information is transmitted.

In combination with the second aspect or any possible implementation manner above thereof, in a possible implementation manner of the second aspect, that the network device sends the system information to the terminal includes: the network device sends a second reconfiguration message carrying the system information to the terminal, the second reconfiguration message being further used for indicating the terminal to modify the connection with the target network device after the terminal has established the connection with the target network device.

In the embodiments of the disclosure, the terminal may acquire the system information, requested by the terminal, of the first network device by receiving the second reconfiguration message sent by the first network device, thereby saving the transmission resources used when the system information is transmitted.

In combination with the second aspect or any possible implementation manner above thereof, in a possible implementation manner of the second aspect, the system information to be used by the terminal includes system information to be updated for the terminal.

A third aspect provides a method for system information transmission, which includes: a target network device receives an identifier of system information sent by a source network device, the source network device being a network device accessed by the terminal at present, and the target network device being a network device to which the terminal intends to be handed over from the source network device; the target network device determines system information to be used by a terminal according to the identifier of the system information; and the target network device sends the system information to the terminal via the source network device.

In the embodiments of the disclosure, the terminal can request system information of a first network device to the first network device via the dedicated control signaling based on an own requirement, so that transmission resources used when the system information is transmitted are saved and the waste of the transmission resources due to the fact that a base station transmits the system information via a broadcasting manner in the conventional art is prevented.

In combination with the third aspect, in a possible implementation manner of the third aspect, that a target network device receives an identifier of system information sent by a source network device includes: the target network device receives a dedicated control signaling, which carries the identifier of the system information, from the source network device.

In the embodiments of the disclosure, the target network device may determine the identifier of the system information via the dedicated control signaling sent by the source network device, and thus may save the signal overhead for transmitting the identifier of the system information by employing the existing dedicated control signaling.

In combination with the third aspect or any possible implementation manner above thereof, in a possible implementation manner of the third aspect, the system information to be used by the terminal includes system information to be updated for the terminal.

A fourth aspect provides a device for system information transmission, which includes a module for executing the method in the first aspect.

A fifth aspect provides a device for system information transmission, which includes a module for executing the method in the second aspect.

A sixth aspect provides a device for system information transmission, which includes a module for executing the method in the third aspect.

A seventh aspect provides a device for system information transmission, which includes a memory, a processor, an input/output interface, a communication interface and a bus system. Herein, the memory, the processor, the input/output interface and the communication interface are connected via the bus system; the memory is configured to store an instruction; the processor is configured to execute the instruction stored by the memory; and when the instruction is executed, the processor executes the method in the first aspect via the communication interface and controls the input/output interface to receive input data and information and output data such as an operation result.

An eighth aspect provides a device for system information transmission, which includes a memory, a processor, an input/output interface, a communication interface and a bus system. Herein, the memory, the processor, the input/output interface and the communication interface are connected via the bus system; the memory is configured to store an instruction; the processor is configured to execute the instruction stored by the memory; and when the instruction is executed, the processor executes the method in the second aspect via the communication interface and controls the input/output interface to receive input data and information and output data such as an operation result.

A ninth aspect provides a device for system information transmission, which includes a memory, a processor, an input/output interface, a communication interface and a bus system. Herein, the memory, the processor, the input/output interface and the communication interface are connected via the bus system; the memory is configured to store an instruction; the processor is configured to execute the instruction stored by the memory; and when the instruction is executed, the processor executes the method in the third aspect via the communication interface and controls the input/output interface to receive input data and information and output data such as an operation result.

A tenth aspect provides a computer readable medium; the computer readable medium is used for storing a program code of a method for sending a search request; and the program code is used for executing the instruction of the method in the first aspect.

An eleventh aspect provides a computer readable medium; the computer readable medium is used for storing a program code of a method for sending a search request; and the program code is used for executing the instruction of the method in the second aspect.

A twelfth aspect provides a computer readable medium; the computer readable medium is used for storing a program code of a method for sending a search request; and the program code is used for executing the instruction of the method in the third aspect.

### BRIEF DESCRIPTION OF DRAWINGS

In order to describe the technical solutions in the embodiments of the disclosure more clearly, a simple introduction on the accompanying drawings which are needed in the description of the embodiments is given below. Apparently, the accompanying drawings in the description below are merely some of the embodiments of the disclosure, based on which other drawings may be obtained by those of ordinary skill in the art without any creative effort.
FIG. 1 illustrates a schematic flowchart of a method for system information transmission according to an embodiment of the disclosure.
FIG. 2 illustrates a schematic flowchart of a method for system information transmission according to another embodiment of the disclosure.
FIG. 3 illustrates a schematic flowchart of a method for system information transmission according to another embodiment of the disclosure.
FIG. 4 illustrates a schematic flowchart of a method for system information transmission according to another embodiment of the disclosure.
FIG. 5 illustrates a schematic flowchart of a method for system information transmission according to another embodiment of the disclosure.
FIG. 6 illustrates a schematic flowchart of a method for system information transmission according to another embodiment of the disclosure.
FIG. 7 illustrates a schematic block diagram of a device for system information transmission according to an embodiment of the disclosure.
FIG. 8 illustrates a schematic block diagram of a device for system information transmission according to another embodiment of the disclosure.
FIG. 9 illustrates a schematic block diagram of a device for system information transmission according to an embodiment of the disclosure.
FIG. 10 illustrates a schematic block diagram of a device for system information transmission according to another embodiment of the disclosure.
FIG. 11 illustrates a schematic block diagram of a device for system information transmission according to another embodiment of the disclosure.
FIG. 12 illustrates a schematic block diagram of a device for system information transmission according to another embodiment of the disclosure.

### DETAILED DESCRIPTION

A clear and complete description of the technical solutions in the disclosure will be given below, in combination with the accompanying drawings in the embodiments of the disclosure. Apparently, the embodiments described below are a part, but not all, of the embodiments of the disclosure. All of the other embodiments, obtained by those of ordinary skill in the art based on the embodiments of the disclosure without any inventive efforts, fall into the protection scope of the disclosure.

It is to be understood that the technical solutions of the disclosure may be applied in various communications systems, such as a Global System of Mobile communication (GSM) system, a Code Division Multiple Access (CDMA) system, a Wideband Code Division Multiple Access (WCDMA) system, a General Packet Radio Service (GPRS) system and an LTE system.

It should be further understood that the terminal may be referred to as User Equipment (UE) and may be also referred to a mobile terminal and a mobile UE, etc. It may communicate with one or more core networks using a Radio Access Network (RAN). The UE may be a mobile terminal such as a mobile telephone (or referred to as "cellular" phone) or a computer having the mobile terminal. For example, the UE may be a portable, pocket-sized, handheld, computer built-in, or in-vehicle mobile device that exchanges a language and/or a data with the RAN.

The network-side device may be referred to a network-side device and may be a Base Transceiver Station (BTS) in a GSM or CDMA, may also be a Node B in a WCDMA and may further be an evolutional Node B (eNB or e-NodeB) in a LTE, all of which are not be defined by the disclosure. For the convenience of description, the following embodiments will be described with the Node B as an example.

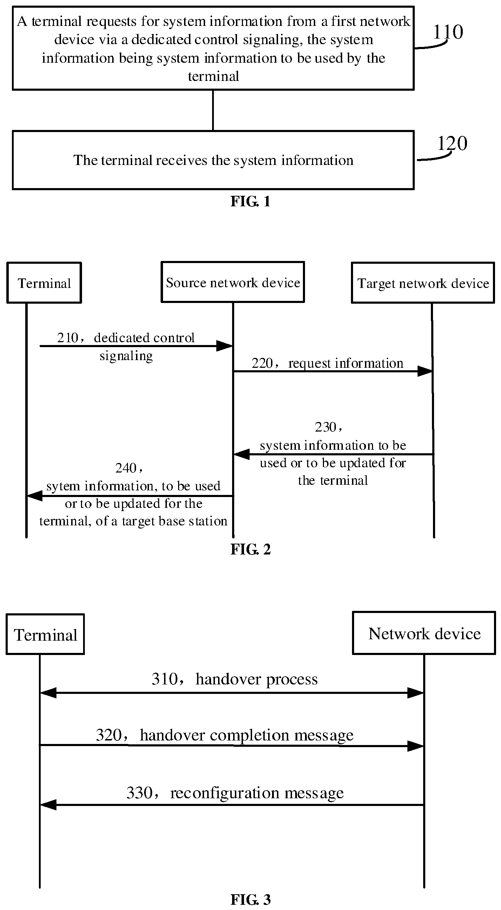

FIG. 1 illustrates a schematic flowchart of a method for system information transmission according to an embodiment of the disclosure. The method shown in FIG. 1 includes the following operations.

At 110, a terminal requests for system information to be used by the terminal from a network device via a dedicated control signaling.

Specifically, the system information may include a Master Information Block (MIB) and multiple System Information Blocks (SIBs). Herein, the MIB may carry the most basic information of the accessed LTE such as a System Frame Number (SFN), so that the terminal acquires time information, a downlink system bandwidth and Physical Hybrid ARQ Indicator Channel (PUICH) configuration information of the system. The SIB1 may carry information on cell selection and residence and scheduling information on other SIBs. The SIB2 carries access limit information of a cell, public channel parameters and configuration information on sub-frames of a Multimedia Broadcast multicast service Single Frequency Network (MBSFN). The SIB3 may carry information relevant to cell re-selection and mainly concerns serving cell re-selection parameters and same-frequency cell re-selection parameters. The SIB4 may carry same-frequency cell re-selection information, such as a same-frequency cell whitelist/blacklist. The SIB5 may carry pilot-frequency cell re-selection information, such as a pilot-frequency neighboring cell list and re-selection parameters of each neighboring cell, and a pilot-frequency cell blacklist. The SIB6 may carry disparate-system cell re-selection information, such as a Universal Terrestrial Radio Access Network (UTRAN) adjacent channel frequency point list, re-selection parameters of each frequency point and a pilot-frequency cell blacklist. The SIB7 may carry the disparate-system cell re-selection information, such as an adjacent-channel frequency point list in a Global System for Mobile Communication / Enhanced Data Rate for GSM Evolution Radio Access Network (GERAN) and re-selection parameters of each frequency point. The SIB8 may carry the disparate-system cell re-selection information, such as a neighboring cell list based on Code Division Multiple Access 2000 (CDMA2000).

It is to be noted that, the above system information may be divided into necessary system information and unnecessary system information. For example, the MIB and the SIB1 in the system are taken as the necessary system information and the SIB2-SIB13 are taken as the unnecessary system information. Herein, the necessary system information may be transmitted in the cell periodically in a broadcasting manner. The unnecessary system information may be sent to the terminal from the network device by employing a manner that the terminal requests to the network device via the dedicated control signaling. In other words, the system information to be used by the terminal may be the unnecessary system information.

It is to be understood that, the system information to be used by the terminal may be the unnecessary system information and may further be the necessary system information, which is not be defined by the disclosure hereto.

It should be further understood that, the necessary system information and the unnecessary system information may be appointed by the terminal and the network device in advance, and for example, may be specified via a protocol. Alternatively, it may be appropriate to enable the network device to indicate the terminal of system information belonging to a necessary system information type in the above system information, and/or system information belonging to an unnecessary system information type in the above system information. For example, the network device may send indication information to the terminal, the indication information carrying a necessary system information type or a necessary system information identifier, which is not specifically defined by the disclosure hereto.

Optionally, the system information to be used by the terminal includes system information to be updated for the terminal.

Specifically, the system information to be updated for the terminal may refer to system information, to be updated, of a target network device after the terminal performs cell handover, and may further be system information of a cell (the cell belongs to a network device accessed by the terminal at present) to be updated for the terminal when system information of the cell changes because the terminal is in the cell for a long time, which is not specifically defined by the disclosure.

Optionally, as an embodiment, in the operation 110, the terminal requests the system information to be used by the terminal to the network device via the dedicated control signaling, and the dedicated control signaling carries an identifier of the system information.

Specifically, the terminal may carry the identifier of the system information to be used by the terminal in the dedicated control signaling, and the identifier of the system information may be used for indicating a type of the system information and/or the system information.

It is to be understood that, the identifier of the system information may be generated by the network device according to a bitmap manner and then the network device sends the generated identifier of the system information to the terminal. The identifier of the system information may further be generated by the terminal directly and the terminal sends the generated identifier of the system information to the network device. The manner for generating the identifier of the system information is not specifically defined by the disclosure.

At 120, the terminal receives the system information.

In this embodiment of the disclosure, the terminal can request the system information to be used by the terminal to the network device via the dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the network device is a source network device accessed by the terminal, that a terminal requests for system information to be used by the terminal from a network device via a dedicated control signaling includes: the terminal requests for the system information from the source network device via the dedicated control signaling; and that the terminal receives the system information includes: the terminal receives system information, forwarded by the source network device, of a target network device, the target network device being a network device to which the terminal intends to be handed over from the source network device.

Specifically, when the terminal intends to be handed over from the source network device to the target network device, it may request the system information of the target network device by sending the dedicated control signaling to the source network device, and the terminal may receive the system information of the target network device via the source network device.

It is to be noted that, when the target network device supports the system information requested by the terminal, the target network device may send the requested system information to the terminal via the source network device; and when the target network device does not support the system information requested by the terminal, the target network device may not reply the terminal.

For example, the terminal requests the SIB8 to the target network device via the source network device. Since the target network device does not support a CDMA2000 system, the target network device may not reply the system information requested by the terminal.

Optionally, as an embodiment, the dedicated control signaling includes a measurement report; the measurement report includes a result of measurement on neighboring cells of the source network device performed by the terminal, and the neighboring cells include a cell of the target network device.

It is to be understood that, the dedicated control signaling may be a Radio Resource Control (RRC) measurement report, may also a dedicated control signaling specified in a future 5G system and functioned as the measurement report, and may further a dedicated signal that other systems require the terminal to send, all of which are not specifically defined by the disclosure.

FIG. 2 illustrates a schematic flowchart of a method for system information transmission according to another embodiment of the disclosure. The method shown in FIG. 2 includes the following operations.

At 210, a terminal sends a measurement report to a source network device.

Specifically, the terminal sends the measurement report to the source network device, and the measurement report carries a type and/or an identifier of the system information to be used by the terminal.

At 220, the source network device sends request information to the target network device.

Specifically, the source network device may send the type and/or identifier of the system information to be used by the terminal and carried in the measurement report to the target network device via the request information based on the measurement report sent by the terminal after determining the target network device.

At 230, the target network device sends system information to be used by the terminal to the source network device.

Specifically, the target network device may determine the system information to be used by the terminal based on the type and/or identifier of the system information sent by the source network device and sends the system information to the terminal.

At 240, the source network device sends the system information to be used by the terminal to the terminal.

Specifically, the source network device sends the system information, to be used by the terminal, of the target network device to the terminal.

Optionally, as an embodiment, in the operation 110, that a terminal requests for system information to be used by the terminal from a network device via a dedicated control signaling includes: the terminal requests for the system information of the network device from the network device via a handover completion message, the handover completion message being further used for indicating that the terminal has been handed over to the network device.

Specifically, when the terminal completes the handover from the source network device to the target network device (namely, the above network device), the terminal may request system information of the target network device to the network device via the handover completion message, and the handover completion message may be used for indicating the terminal of completing the handover from the source network device to the target network device.

Optionally, as an embodiment, the terminal may carry the identifier of the system information to be used by the terminal in the handover completion message and the identifier of the system information may indicate a type of the system information.

It is to be noted that, the handover completion message may be a reconfiguration completion message indicating that the terminal completes the handover from the source network device to the target network device.

It is to be understood that, the handover completion message may be an RRC reconfiguration completion message and may further be a dedicated control signaling specified in the future 5G system and functioned as the RRC reconfiguration completion message, all of which are not specifically defined by the disclosure.

Optionally, as an embodiment, in the operation 120, that the terminal receives the system information includes: the terminal receives a first reconfiguration message, which carries the system information, from the network device, the first reconfiguration message being further used for indicating the terminal to modify a connection with the network device after the terminal has handed over to the network device.

Specifically, after the terminal completes the handover from the source network device to the target network device (the above network device), the terminal may receive a first reconfiguration message sent by the target network device and the first reconfiguration message carries the system information to be used by the terminal.

It is to be noted that, the first reconfiguration message may be an RRC reconfiguration message, may be any reconfiguration message after the handover completion message sent by the terminal to the network device, and may further be a dedicated control signaling specified in the future 5G system and functioned as the RRC reconfiguration completion message. For example, the first reconfiguration message may be a reconfiguration message indicating the terminal of reconfiguring a wireless bearer, a data wireless bearer, a transmission channel and a physical channel.

FIG. 3 illustrates a schematic flowchart of a method for system information transmission according to another embodiment of the disclosure. The method shown in FIG. 3 includes the following operations.

At 310, a terminal completes a handover process of handover from a source network device to a network device.

Specifically, the terminal completes the handover process of handover from the source network device to the network device (namely, a target network device), which means that the network device is a current network device serving the terminal.

At 320, the terminal sends a handover completion message to the network device.

Specifically, the terminal may send the handover completion message to the network device, and the handover completion message carries an identifier of system information, to be used by the terminal, of the network device.

At 330, the terminal receives a reconfiguration message sent by the network device.

Specifically, the terminal receives the reconfiguration message sent by the network device and the reconfiguration message carries the system information, to be used by the terminal, of the network device.

Optionally, as an embodiment, in the operation 110, that a terminal requests for system information to be used by the terminal from a network device via a dedicated control signaling includes: the terminal requests for the system information of the network device from the network device via a connection re-establishment request message, the connection re-establishment request message being further used by the terminal to request to re-establish the connection with the network device.

Specifically, when the terminal re-establishes the connection with the network device, the terminal may send the connection re-establishment request message to the network device so as to request the system information, to be used by the terminal, of the network device to the network device.

It is to be understood that, the connection re-establishment request message may be an RRC connection re-establishment request message and may further be a dedicated control signaling specified in the future 5G system and functioned as the RRC connection re-establishment request message, all of which are not specifically defined by the disclosure.

Optionally, as an embodiment, the terminal may carry the identifier of the system information, to be used by the terminal, of the network device in the connection re-establishment request message and the identifier of the system information may indicate a type of the system information.

It is to be understood that, the reasons that the terminal re-establishes the connection with the network device include: the terminal triggers a connection re-establishment process due to conditions such that the handover is failed, a wireless link is failed, the integrity protection is failed and the RRC reconfiguration is failed. The condition that the terminal triggers the connection re-establishment is not specifically defined by this embodiment of the disclosure.

It should be further understood that the network device may be a network device accessed before the terminal performs the connection re-establishment, namely the source network device. The network device may further be the target network device to which the terminal intends to be handed over.

For example, in a case where the terminal is triggered to re-establish the connection with the source network device because the handover is failed, the terminal may send the connection re-establishment request message to the source network device and requests system information of the source network device to the source network device. At this moment, the source network device is the network device. In a case where the terminal breaks down due to a wireless link of the source network device, the terminal may send the connection re-establishment request to the target network device and requests system information of the target network device to the target network device; and at this moment, the target network device is the network device.

Optionally, as an embodiment, in the operation 120, that the terminal receives the system information includes: the terminal receives the connection re-establishment message sent by the network device and carrying the system information, the connection re-establishment message being used for indicating the terminal to re-establish the connection with the network device.

Specifically, when the terminal re-establishes the connection with the network device, the terminal may receive the connection re-establishment request message sent by the network device, and the connection re-establishment request carries the system information, to be used by the terminal, of the network device.

It is to be understood that, the connection re-establishment request message may be an RRC connection re-establishment request message and may further be a dedicated control signaling specified in the future 5G system and functioned as the RRC connection re-establishment request message, all of which are not specifically defined by the disclosure.

It should be further understood that, the reasons that the terminal re-establishes the connection include: the terminal triggers a connection re-establishment process due to conditions such that the handover is failed, a wireless link is failed, the integrity protection is failed and the RRC reconfiguration is failed. The condition that the terminal triggers the connection re-establishment is not specifically defined by this embodiment of the disclosure.

Optionally, as an embodiment, in the operation 110, that a terminal requests for system information to be used by the terminal from a network device via a dedicated control signaling includes: the terminal requests for the system information of the network device from the network device via a connection re-establishment completion message, the connection re-establishment completion message being further used for indicating that the terminal has re-established the connection with the network device.

Specifically, when the terminal re-establishes the connection with the network device, the terminal may send the connection re-establishment completion message to the network device so as to request the system information, to be used by the terminal, of the network device to the network device via the connection re-establishment completion message.

It is to be understood that, the connection re-establishment completion message may be an RRC connection re-establishment completion message and may further be a dedicated control signaling specified in the future 5G system and functioned as the RRC connection re-establishment completion message, all of which are not specifically defined by the disclosure.

Optionally, as an embodiment, the terminal may carry the identifier of the system information, to be used by the terminal, of the network device in the connection re-establishment request message and the identifier of the system information may indicate a type of the system information.

It is to be understood that, the reasons that the terminal re-establishes the connection with the network device include: the terminal triggers a connection re-establishment process due to conditions such that the handover is failed, a wireless link is failed, the integrity protection is failed and the RRC reconfiguration is failed. The condition that the terminal triggers the connection re-establishment is not specifically defined by this embodiment of the disclosure.

It should be further understood that the network device may be a network device accessed before the terminal performs the connection re-establishment, namely the source network device. The network device may further be the target network device to which the terminal intends to be handed over.

Optionally, as an embodiment, in the operation 120, that the terminal receives the system information includes: the terminal receives a second reconfiguration message, which carries the system information, from the network device, the second reconfiguration message being further used for indicating the terminal of modifying a connection with the network device after establishing the connection with the network device.

Specifically, when the terminal re-establishes the connection with the network device, the terminal may receive the second reconfiguration message sent by the network device, and the second reconfiguration message carries the system information, to be used by the terminal, of the network device.

It is to be understood that, the second reconfiguration message may be an RRC reconfiguration message and may further be a dedicated control signaling specified in the future 5G system and functioned as the RRC reconfiguration message, all of which are not specifically defined by the disclosure.

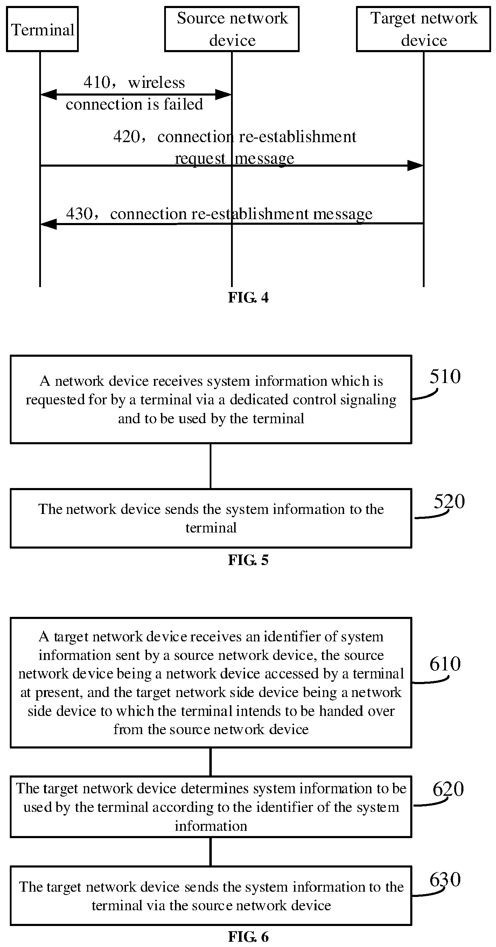

FIG. 4 illustrates a schematic flowchart of a method for system information transmission according to another embodiment of the disclosure. The method shown in FIG. 4 includes the following operations.

At 410, a wireless connection between a terminal and a source network device is failed.

Specifically, since the wireless connection between the terminal and the source network device is failed, the terminal is triggered to re-establish a connection with a target network device (the above network device).

It is to be understood that, the wireless connection between the terminal and the source network device is failed, which is only taken as a case in which the terminal is triggered to re-establish the connection with the target network device. The reasons that the terminal is triggered to perform the connection res-establishment process are not specifically defined by this embodiment of the disclosure.

At 420, the terminal sends a connection re-establishment request message to the target network device.

Specifically, the terminal may send the connection re-establishment request message to the target network device, and the connection re-establishment request message carries an identifier of system information, to be used by the terminal, of the target network device.

At 430, the terminal receives the connection re-establishment request message sent by the target network device.

Specifically, the terminal receives the connection re-establishment request message sent by the target network device and the connection re-establishment request message carries the system information of the target network device, in which the system information is determined by the target network device via the identifier of the system information.

The system information transmission method according to the embodiments of the disclosure is described above in detail in combination with FIG. 1 to FIG. 4 from the perspective of the terminal. Hereinafter, the system information transmission method according to the embodiments of the disclosure will be described in detail in combination with FIG. 5 and FIG. 6 from the perspective of a network device. It is to be understood that the interaction between the terminal and the network device in the system information transmission method described from the network device and relevant characteristics, functions and the like correspond to the system information transmission method described from the terminal side, which will not be repeated for conciseness.

FIG. 5 illustrates a schematic flowchart of a method for system information transmission according to another embodiment of the disclosure. The method shown in FIG. 5 includes the following operations.

At 510, a network device receives system information which is requested for by a terminal via a dedicated control signaling and to be used by the terminal.

It is to be noted that the network device determines the system information, requested by the terminal via the dedicated control signaling, of the network device, which may refer to that the terminal sends the dedicated control signaling to a network device (namely, the source network device) accessed by the terminal at present and the source network device sends the dedicated control signaling to a network device (namely, the target network device) to request the system information of the network device. It may further refer to that the terminal sends the dedicated control signaling to the network device (namely, the source network device) accessed by the terminal at present and the source network device sends an identifier of the system information carried in the dedicated control signaling to the network device (namely, the target network device) to request the system information of the first network device.

Optionally, the system information to be used by the terminal includes system information to be updated for the terminal.

At 520, the network device sends the system information to the terminal.

In this embodiment of the disclosure, the terminal can request for the system information of the network device from the network device via the dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the network device is a source network device accessed by the terminal; before the network device sends the system information to the terminal, the method further includes: the network device sends the dedicated control signaling to a target network device, the target network device being a network device to which the terminal intends to be handed over; and the network device receives the system information sent by the target network device; and that the network device sends the system information to the terminal includes: the network device sends the system information to the terminal.

Optionally, as an embodiment, the network device is a source network device accessed by the terminal; before the network device sends the system information to the terminal, the method further includes: the network device sends an identifier of the system information to a target network device, the target network device being a network device to which the terminal device intends to be handed over; and the network device receives the system information sent by the target network device, the system information being determined by the network device based on the identifier of the system information, and that the network device sends the system information to the terminal includes: the network device sends the system information to the terminal.

Optionally, as an embodiment, the dedicated control signaling includes a measurement report; the measurement report includes a result of measurement on neighboring cells of the source network device performed by the terminal, and the neighboring cells include a cell of the target network device.

It is to be understood that, the dedicated control signaling may be a Radio Resource Control (RRC) measurement report, may also a dedicated control signaling specified in a future 5G system and functioned as the measurement report, and may further a dedicated signal that other systems require the terminal to send, all of which are not specifically defined by the disclosure.

Optionally, as an embodiment, that a network device receives system information which is requested for by a terminal via a dedicated control signaling and to be used by the terminal includes: the network device determines the system information of the network device via a handover completion message sent by the terminal, the handover completion message being further used for indicating that the terminal has been handed over to the network device.

It is to be understood that, the handover completion message may be an RRC reconfiguration completion message and may further be a dedicated control signaling specified in the future 5G system and functioned as the RRC reconfiguration completion message, all of which are not specifically defined by the disclosure.

Optionally, as an embodiment, that the terminal sends the system information to the terminal includes: the network device sends a first reconfiguration message carrying the system information to the terminal, the first reconfiguration message being further used for indicating the terminal to modify a connection with the network device after the terminal has handed over to the network device.

It is to be noted that, the first reconfiguration message may be an RRC reconfiguration message, may be any reconfiguration message after the handover completion message sent by the terminal to the network device, and may further be a dedicated control signaling specified in the future 5G system and functioned as the RRC reconfiguration completion message. For example, the first reconfiguration message may be a reconfiguration message indicating the terminal of reconfiguring a wireless bearer, a data wireless bearer, a transmission channel and a physical channel.

Optionally, as an embodiment, that a network device receives system information which is requested for by a terminal via a dedicated control signaling and to be used by the terminal includes: the network device determines the system information of the network device via a connection re-establishment request message sent by the terminal, the connection re-establishment request message being further used for indicating the terminal of re-establishing the connection with the network device.

It is to be understood that, the connection re-establishment request message may be an RRC connection re-establishment request message and may further be a dedicated control signaling specified in the future 5G system and functioned as the RRC connection re-establishment request message, all of which are not specifically defined by the disclosure.

Optionally, as an embodiment, that the network device sends the system information to the terminal includes: the network device sends the connection re-establishment message carrying the system information to the terminal, the connection re-establishment message being used for indicating the terminal to re-establish the connection with the network device.

It is to be understood that, the connection re-establishment request message may be an RRC connection re-establishment request message and may further be a dedicated control signaling specified in the future 5G system and functioned as the RRC connection re-establishment request message, all of which are not specifically defined by the disclosure.

Optionally, as an embodiment, that a network device receives system information which is requested for by a terminal via a dedicated control signaling and to be used by the terminal includes: the network device determines the system information of the network device via a connection re-establishment completion message sent by the terminal, the connection re-establishment completion message being further used for indicating that the terminal has re-established the connection with the network device.

It is to be understood that, the connection re-establishment completion message may be an RRC connection re-establishment completion message and may further be a dedicated control signaling specified in the future 5G system and functioned as the RRC connection re-establishment completion message, all of which are not specifically defined by the disclosure.

Optionally, as an embodiment, that the terminal sends the system information to the terminal includes: the network device sends a second reconfiguration message carrying the system information to the terminal, the second reconfiguration message being used for indicating the terminal of modifying a connection with the network device after establishing the connection with the network device.

It is to be understood that, the second reconfiguration message may be an RRC reconfiguration message and may further be a dedicated control signaling specified in the future 5G system and functioned as the RRC reconfiguration message, all of which are not specifically defined by the disclosure.

FIG. 6 illustrates a schematic flowchart of a method for system information transmission according to another embodiment of the disclosure. The method shown in FIG. 6 includes the following operations.

At 610, a target network device receives an identifier of system information sent by a source network device, the source network device being a network device accessed by a terminal at present, and the target network device being a network device to which the terminal intends to be handed over from the source network device.

At 620, the target network device determines system information to be used by the terminal according to the identifier of the system information.

At 630, the target network device sends the system information to the terminal via the source network device.

In this embodiment of the disclosure, the terminal can request the system information to be used by the terminal to the network device via a dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, that a target network device receives an identifier of system information sent by a source network device includes: the target network device receives a dedicated control signaling, which carries the identifier of the system information, from the source network device.

Optionally, as an embodiment, the system information to be used by the terminal includes system information to be updated for the terminal.

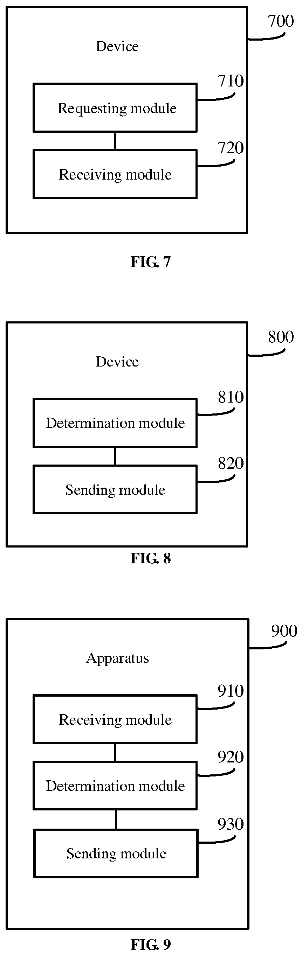

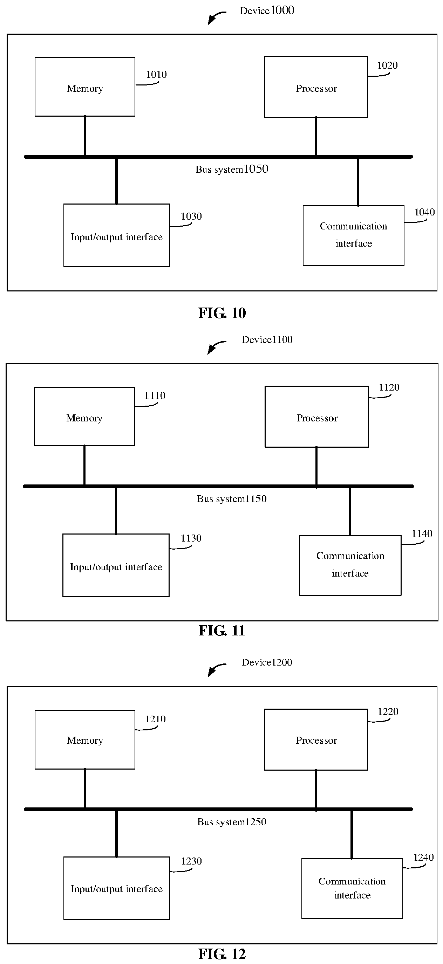

The system information transmission method according to the embodiments of the disclosure is described above in detail in combination with FIG. 1 to FIG. 6. Hereinafter, the system information transmission method according to the embodiments of the disclosure will be described in detail in combination with FIG. 7 and FIG. 12. It is to be understood that, the device shown in FIG. 7 and FIG. 10 can implement each operation in FIG. 1, the device shown in FIG. 8 and FIG. 11 can implement each operation in FIG. 2 and the device shown in FIG. 9 and FIG. 12 can implement each operation in FIG. 3, all of which will not be described in detail to avoid the repetition.

FIG. 7 illustrates a schematic block diagram of a device for system information transmission according to an embodiment of the disclosure. The device 700 shown in FIG. 7 includes a requesting module 710 and a receiving module 720.

The requesting module 710 is configured to request for system information to be used by the terminal from a network device via a dedicated control signaling.

The receiving module 720 is configured to receive the system information.

In this embodiment of the disclosure, the terminal can request for the system information of the network device from the network device via a dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the network device is a source network device accessed by the terminal, the requesting module is specifically configured to: request for the system information from the source network device via the dedicated control signaling; and the receiving module is specifically configured to: receive system information, forwarded by the source network device, of a target network device, the target network device being a network device to which the terminal intends to be handed over from the source network device.

Optionally, as an embodiment, the dedicated control signaling includes a measurement report; the measurement report includes a result of measurement on neighboring cells of the source network device performed by the terminal, and the neighboring cells include a cell of the target network device.

Optionally, as an embodiment, the requesting module is further specifically configured to: request for the system information of the network device from the network device via a handover completion message, the handover completion message being further used for indicating that the terminal has been handed over to the network device.

Optionally, as an embodiment, the receiving module is further specifically configured to: receive a first reconfiguration message, which carries the system information, from the network device, the first reconfiguration message being further used for indicating the terminal to modify a connection with the network device after the terminal has handed over to the network device.

Optionally, as an embodiment, the requesting module is further specifically configured to: request for the system information of the network device from the network device via a connection re-establishment request message, the connection re-establishment request message being further used by the terminal for requesting for re-establishing the connection with the network device.

Optionally, as an embodiment, the receiving module is further specifically configured to: receive the connection re-establishment message sent by the network device and carrying the system information, the connection re-establishment message being used for indicating the terminal to re-establish the connection with the network device.

Optionally, as an embodiment, the requesting module is further specifically configured to: request for the system information of the network device from the network device via a connection re-establishment completion message, the connection re-establishment completion message being further used for indicating that the terminal has re-established the connection with the network device.

Optionally, as an embodiment, the receiving module is further specifically configured to: receive a second reconfiguration message, which carries the system information, from the network device, the second reconfiguration message being further used for indicating the terminal of modifying a connection with the network device after establishing the connection with the network device.

Optionally, as an embodiment, the system information to be used by the terminal includes system information to be updated for the terminal.

FIG. 8 illustrates a schematic block diagram of a device for system information transmission according to another embodiment of the disclosure. The device 800 shown in FIG. 8 includes a first receiving module 810 and a first sending module 820.

The first receiving module 810 is configured to receive system information which is requested for by a terminal via a dedicated control signaling and to be used by the terminal.

The first sending module 820 is configured to send the system information to the terminal.

In this embodiment of the disclosure, the terminal can request for the system information of the network device from the network device via the dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the network device is a source network device accessed by the terminal; the device further includes: a second sending module, configured to send the dedicated control signaling to a target network device, the target network device being a network device to which the terminal intends to be handed over; and a second receiving module, configured to receive the system information sent by the target network device; and the first sending module is specifically configured to: send the system information to the terminal.

Optionally, as an embodiment, the network device is a source network device accessed by the terminal; the device further includes: a third sending module, configured to send an identifier of the system information to a target network device, the target network device being a network device to which the terminal intends to be handed over; and a third receiving module, configured to receive the system information sent by the target network device, the system information being determined by the network device based on the identifier of the system information; and the first sending module is specifically configured to: send the system information to the terminal.

Optionally, as an embodiment, the dedicated control signaling includes a measurement report; the measurement report includes a result of measurement on neighboring cells of the source network device performed by the terminal, and the neighboring cells include a cell of the target network device.

Optionally, as an embodiment, the first receiving module is further specifically configured to: determine the system information of the network device via a handover completion message sent by the terminal, the handover completion message being further used for indicating that the terminal has been handed over to the network device.

Optionally, as an embodiment, the first sending module is further specifically configured to: send a first reconfiguration message carrying the system information to the terminal, the first reconfiguration message being further used for indicating the terminal to modify a connection with the network device after the terminal has handed over to the network device.

Optionally, as an embodiment, the first receiving module is further specifically configured to: determine the system information of the network device via a connection re-establishment request message sent by the terminal, the connection re-establishment request message being further used by the terminal for requesting for re-establishing the connection with the network device.

Optionally, as an embodiment, the first sending module is further specifically configured to: send the connection re-establishment message carrying the system information to the terminal, the connection re-establishment message being used for indicating the terminal to re-establish the connection with the network device.

Optionally, as an embodiment, the first receiving module is further specifically configured to: determine the system information of the network device via a connection re-establishment completion message sent by the terminal, the connection re-establishment completion message being further used for indicating that the terminal has re-established the connection with the network device.

Optionally, as an embodiment, the first sending module is further specifically configured to: send a second reconfiguration message carrying the system information to the terminal, the second reconfiguration message being used for indicating the terminal of modifying the connection with the network device after establishing the connection with the target network device.

Optionally, as an embodiment, the system information to be used by the terminal includes system information to be updated for the terminal.

FIG. 9 illustrates a schematic block diagram of a device for system information transmission according to an embodiment of the disclosure. The device 900 shown in FIG. 9 includes a receiving module 910, a determination module 920 and a sending module 930.

The receiving module 910 is configured to receive an identifier of system information sent by a source network device, the source network device being a network device accessed by a terminal at present, and the target network device being a network device to which the terminal intends to be handed over from the source network device.

The determination module 920 is configured to determine system information to be used by the terminal according to the identifier of the system information.

The sending module 930 is configured to send the system information to the terminal via the source network device.

In this embodiment of the disclosure, the terminal can request for the system information of the network device from the network device via a dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the receiving module is specifically configured to: receive a dedicated control signaling sent by the source network device and carrying the system information.

Optionally, as an embodiment, the system information to be used by the terminal includes system information to be updated for the terminal.

FIG. 10 illustrates a schematic block diagram of a device for system information transmission according to an embodiment of the disclosure. The device 1000 shown in FIG. 8 includes a memory 1010, a processor 1020, an input/output interface 1030, a communication interface 1040 and a bus system 1050. Herein, the memory 1010, the processor 1020, the input/output interface 1030 and the communication interface 1040 are connected via the bus system 1050. The memory 1010 is configured to store an instruction. The processor 1020 is configured to execute the instruction stored by the memory 1010 so as to control the input/output interface 1030 to receive input data and information, output data such as an operation result and control the communication interface 1040 to send a signal.

The communication interface 1040 is configured to request system information to be used by a terminal to a network device via a dedicated control signaling, and is further configured to receive the system information.

It is to be understood that, in this embodiment of the disclosure, the processor 1020 may be a universal Central Processing Unit (CPU), a microprocessor, an Application Specific Integrated Circuit (ASIC), or one or more integrated circuit, and is configured to execute a related procedure to implement the technical solutions provided by this embodiment of the disclosure.

It should be further understood that, the communication interface 1040 employs, for example but is not limited to, a transmitter-receiver set such as a transmitter-receiver to implement the communication between the device 1000 and other devices or communication networks.

The memory 1010 may include a Read-Only Memory (ROM) and a Random-Access Memory (RAM) and provides instructions and data for the processor 1020. A part of the processor 1020 may further include a nonvolatile random access memory. For example, the processor 1020 may further store information on a type of a storage device.

Beside a data bus, the bus system 1050 may further include a power bus, a control bus and a state signal bus, etc. For clarity of description, various buses in the figure all are marked as the bus system 1050.

In an implementation process, the operations in the foregoing methods may be completed using an integrated logic circuit of hardware in the processor 1020 or an instruction in a form of software. Steps of the methods disclosed with reference to the embodiments of the disclosure may be directly executed and accomplished by means of a hardware processor or may be executed and accomplished using a combination of hardware and software modules in the processor. The software module may be located in a mature storage medium in the art, such as a RAM, a flash memory, a ROM, a programmable ROM (PROM), an electrically erasable PROM (EEPROM) or a register. The storage medium is located in the memory 1010. The processor 1020 reads information from the memory 810 and completes the operations of the foregoing methods in combination with the hardware. To avoid repetition, details are not described herein again.

In this embodiment of the disclosure, the terminal can request for the system information of the network device from the network device via the dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the network device is a source network device accessed by the terminal, the communication interface is specifically configured to: request for the system information from the source network device via the dedicated control signaling; and the communication interface is specifically configured to: receive system information, forwarded by the source network device, of a target network device, the target network device being a network device to which the terminal intends to be handed over from the source network device.

Optionally, as an embodiment, the dedicated control signaling includes a measurement report; the measurement report includes a result of measurement on neighboring cells of the source network device performed by the terminal, and the neighboring cells include a cell of the target network device.

Optionally, as an embodiment, the communication interface is further specifically configured to: request for the system information of the network device from the network device via a handover completion message, the handover completion message being further used for indicating that the terminal has been handed over to the network device.

Optionally, as an embodiment, the communication interface is further specifically configured to: receive a first reconfiguration message, which carries the system information, from the network device, the first reconfiguration message being further used for indicating the terminal to modify a connection with the network device after the terminal has handed over to the network device.

Optionally, as an embodiment, the communication interface is further specifically configured to: request for the system information of the network device from the network device via a connection re-establishment request message, the connection re-establishment request message being further used by the terminal for requesting for re-establishing the connection with the network device.

Optionally, as an embodiment, the communication interface is further specifically configured to: receive the connection re-establishment message sent by the network device and carrying the system information, the connection re-establishment message being used for indicating the terminal to re-establish the connection with the network device.

Optionally, as an embodiment, the communication interface is further specifically configured to: request for the system information of the network device from the network device via a connection re-establishment completion message, the connection re-establishment completion message being further used for indicating that the terminal has re-established the connection with the network device.

Optionally, as an embodiment, the communication interface is further specifically configured to: receive a second reconfiguration message, which carries the system information, from the network device, the second reconfiguration message being further used for indicating the terminal of modifying a connection with the network device after establishing the connection with the network device.

Optionally, as an embodiment, the system information to be used by the terminal includes system information to be updated for the terminal.

FIG. 11 illustrates a schematic block diagram of a device for system information transmission according to another embodiment of the disclosure. The device 1100 shown in FIG. 8 includes a memory 1110, a processor 1120, an input/output interface 1130, a communication interface 1140 and a bus system 1150. Herein, the memory 1110, the processor 1120, the input/output interface 1130 and the communication interface 1140 are connected via the bus system 1150. The memory 1110 is configured to store an instruction. The processor 1120 is configured to execute the instruction stored by the memory 1110 so as to control the input/output interface 1130 to receive input data and information, output data such as an operation result and control the communication interface 1140 to send a signal.

The processor 1120 is configured to receive system information which is requested for by a terminal via a dedicated control signaling and to be used by the terminal.

The communication interface 1140 is configured to send the system information to the terminal.

It is to be understood that, in this embodiment of the disclosure, the processor 1120 may be a universal Central Processing Unit (CPU), a microprocessor, an Application Specific Integrated Circuit (ASIC), or one or more integrated circuit, and is configured to execute a related procedure to implement the technical solutions provided by this embodiment of the disclosure.

It should be further understood that, the communication interface 1140 employs, for example but is not limited to, a transmitter-receiver set such as a transmitter-receiver to implement the communication between the device 1100 and other devices or communication networks.

The memory 1110 may include a Read-Only Memory (ROM) and a Random-Access Memory (RAM) and provides instructions and data for the processor 1120. A part of the processor 1120 may further include a nonvolatile random access memory. For example, the processor 1120 may further store information on a type of a storage device.

Beside a data bus, the bus system 1150 may further include a power bus, a control bus and a state signal bus, etc. For clarity of description, various buses in the figure all are marked as the bus system 1150.

In an implementation process, the operations in the foregoing methods may be completed using an integrated logic circuit of hardware in the processor 1120 or an instruction in a form of software. Steps of the methods disclosed with reference to the embodiments of the disclosure may be directly executed and accomplished by means of a hardware processor or may be executed and accomplished using a combination of hardware and software modules in the processor. The software module may be located in a mature storage medium in the art, such as a RAM, a flash memory, a ROM, a programmable ROM (PROM), an electrically erasable PROM (EEPROM) or a register. The storage medium is located in the memory 1110. The processor 1120 reads information from the memory 1010 and completes the operations of the foregoing methods in combination with the hardware. To avoid repetition, details are not described herein again.

In this embodiment of the disclosure, the terminal can request for the system information of the network device from the network device via a dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the network device is a source network device accessed by the terminal; the communication interface is configured to send the dedicated control signaling to a target network device, the target network device being a network device to which the terminal intends to be handed over, and is configured to receive the system information sent by the target network device and send the system information to the terminal.

Optionally, as an embodiment, the network device is a source network device accessed by the terminal; the communication interface is configured to send an identifier of the system information to a target network device, the target network device being a network device to which the terminal intends to be handed over, and is configured to receive the system information sent by the target network device, the system information being determined by the network device based on the identifier of the system information, and send the system information to the terminal.

Optionally, as an embodiment, the dedicated control signaling includes a measurement report; the measurement report includes a result of measurement on neighboring cells of the source network device performed by the terminal, and the neighboring cells include a cell of the target network device.

Optionally, as an embodiment, the communication interface is further specifically configured to: determine the system information of the network device via a handover completion message sent by the terminal, the handover completion message being further used for indicating that the terminal has been handed over to the network device.

Optionally, as an embodiment, the communication interface is further specifically configured to: send a first reconfiguration message carrying the system information to the terminal, the first reconfiguration message being further used for indicating the terminal to modify a connection with the network device after the terminal has handed over to the network device.

Optionally, as an embodiment, the communication interface is further specifically configured to: determine the system information of the network device via a connection re-establishment request message sent by the terminal, the connection re-establishment request message being further used by the terminal for requesting for re-establishing the connection with the network device.

Optionally, as an embodiment, the communication interface is further specifically configured to: send the connection re-establishment message carrying the system information to the terminal, the connection re-establishment message being used for indicating the terminal to re-establish the connection with the network device.

Optionally, as an embodiment, the communication interface is further specifically configured to: determine the system information of the network device via a connection re-establishment completion message sent by the terminal, the connection re-establishment completion message being further used for indicating that the terminal has re-established the connection with the network device.

Optionally, as an embodiment, the communication interface is further specifically configured to: send a second reconfiguration message carrying the system information to the terminal, the second reconfiguration message being used for indicating the terminal of modifying the connection with the network device after establishing the connection with the target network device.

Optionally, as an embodiment, the system information to be used by the terminal includes system information to be updated for the terminal.

FIG. 12 illustrates a schematic block diagram of a device for system information transmission according to another embodiment of the disclosure. The device 1200 shown in FIG. 12 includes a memory 1210, a processor 1220, an input/output interface 1230, a communication interface 1240 and a bus system 1250. Herein, the memory 1210, the processor 1220, the input/output interface 1230 and the communication interface 1240 are connected via the bus system 1250. The memory 1210 is configured to store an instruction. The processor 1220 is configured to execute the instruction stored by the memory 1210 so as to control the input/output interface 1230 to receive input data and information, output data such as an operation result and control the communication interface 1240 to send a signal.

The communication interface 1240 is configured to receive an identifier of system information sent by a source network device, the source network device being a network device accessed by a terminal at present, and the target network device being a network device to which the terminal intends to be handed over from the source network device.

The processor 1220 is configured to determine system information to be used by the terminal according to the identifier of the system information.

The communication interface 1240 is configured to send the system information to the terminal via the source network device.

It is to be understood that, in this embodiment of the disclosure, the processor 1220 may be a universal Central Processing Unit (CPU), a microprocessor, an Application Specific Integrated Circuit (ASIC), or one or more integrated circuit, and is configured to execute a related procedure to implement the technical solutions provided by this embodiment of the disclosure.

It should be further understood that, the communication interface 1240 employs, for example but is not limited to, a transmitter-receiver set such as a transmitter-receiver to implement the communication between the device 1200 and other devices or communication networks.

The memory 1210 may include a Read-Only Memory (ROM) and a Random-Access Memory (RAM) and provides instructions and data for the processor 1220. A part of the processor 1220 may further include a nonvolatile random access memory. For example, the processor 1220 may further store information on a type of a storage device.

Beside a data bus, the bus system 1250 may further include a power bus, a control bus and a state signal bus, etc. For clarity of description, various buses in the figure all are marked as the bus system 1250.

In an implementation process, the operations in the foregoing methods may be completed using an integrated logic circuit of hardware in the processor 1220 or an instruction in a form of software. Steps of the methods disclosed with reference to the embodiments of the disclosure may be directly executed and accomplished by means of a hardware processor or may be executed and accomplished using a combination of hardware and software modules in the processor. The software module may be located in a mature storage medium in the art, such as a RAM, a flash memory, a ROM, a programmable ROM (PROM), an electrically erasable PROM (EEPROM) or a register. The storage medium is located in the memory 1210. The processor 1220 reads information from the memory 1210 and completes the operations of the foregoing methods in combination with the hardware. To avoid repetition, details are not described herein again.

In this embodiment of the disclosure, the terminal can request for the system information of the network device from the network device via a dedicated control signaling based on an own requirement, so that transmission resources used when the system information is transmitted are saved and the waste of the transmission resources due to the fact that a base station transmits the system information via a broadcasting manner in the conventional art is prevented.

Optionally, as an embodiment, the receiving module is specifically configured to: receive a dedicated control signaling sent by the source network device and carrying the system information.

Optionally, as an embodiment, the system information to be used by the terminal includes system information to be updated for the terminal.

It is to be understood that, in this embodiment of the disclosure, "B corresponding to A" represents that the B is associated with the A and the B may be determined according to the A. However, it should be further understood that the B is determined according to the A, which does not mean the B is determined only according to the A and the B may further be determined according to the A and/or other information.

It is to be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It is to be understood that, in each embodiment of the disclosure, sequence numbers of the foregoing processes do not mean execution sequences in various embodiments of the disclosure. The execution sequences of the processes should be determined according to functions and internal logic of the processes, and should not be construed as any limitation on the implementation processes of the embodiments of the disclosure.

A person of ordinary skill in the art may be aware that, in combination with the examples described in the embodiments disclosed in this specification, units and algorithm operations may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the disclosure.

It may be clearly understood by a person skilled in the art that, for the purpose of convenient and brief description, for a detailed working process of the foregoing system, device, and unit, reference may be made to a corresponding process in the foregoing method embodiments, and details are not described herein again.

In the several embodiments provided in the present application, it should be understood that the disclosed system, device, and method may be implemented in other manners. For example, the described device embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the disclosure may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the disclosure essentially, or the part contributing to the prior art, or some of the technical solutions may be implemented in a form of a software product. The software product is stored in a storage medium and includes several instructions for instructing a computer device (which may be a personal computer, a server, or a network device) to perform all or some of the operations of the methods described in the embodiments of the disclosure. The foregoing storage medium includes any medium that can store program code, such as a universal serial bus (USB) flash drive, a removable hard disk, a ROM, a RAM, a magnetic disk, or an optical disc.

The foregoing descriptions are merely implementation manners of the disclosure but are not intended to limit the protection scope of the disclosure. Any variation or replacement readily figured out by a person skilled in the art within the technical scope disclosed in the disclosure shall fall within the protection scope of the disclosure. Therefore, the protection scope of the disclosure shall be subject to the protection scope of the claims.

## Claims

1. A method for system message transmission, comprising:
requesting, by a terminal, for system information to be used by the terminal from a network device via a dedicated control signaling; and
receiving, by the terminal, the system information.

2. The method of claim 1, wherein requesting, by a terminal, for system information to be used by the terminal from a network device via a dedicated control signaling comprises:
requesting, by the terminal, for the system information of the network device from the network device via a handover completion message, the handover completion message being further used for indicating that the terminal has been handed over to the network device.

3. The method of claim 1 or 2, wherein receiving, by the terminal, the system information comprises:
receiving, by the terminal, a first reconfiguration message, which carries the system information, from the network device, the first reconfiguration message being further used for indicating the terminal to modify a connection with the network device after the terminal has handed over to the network device.

4. The method of claim 1, wherein requesting, by a terminal, for system information to be used by the terminal from a network device via a dedicated control signaling comprises:
requesting, by the terminal, for the system information of the network device from the network device via a connection re-establishment request message, the connection re-establishment request message being further used by the terminal for requesting for re-establishing the connection with the network device.

5. The method of claim 1 or 4, wherein receiving, by the terminal, the system information comprises:
receiving, by the terminal, a connection re-establishment message, which carries the system information, from the network device, the connection re-establishment message being further used for indicating the terminal to re-establish the connection with the network device.

6. The method of claim 1, wherein requesting, by a terminal, for system information to be used by the terminal from a network device via a dedicated control signaling comprises:
requesting, by the terminal, for the system information of the network device from the network device via a connection re-establishment completion message, the connection re-establishment completion message being further used for indicating that the terminal has re-established the connection with the network device.

7. The method of claim 1 or 6, wherein receiving, by the terminal, the system information comprises:
receiving, by the terminal, a second reconfiguration message, which carries the system information, from the network device, the second reconfiguration message being further used for indicating the terminal to modify the connection with the network device after the terminal has established the connection with the network device.

8. The method of claim 1, wherein the dedicated control signaling carries an identifier of the system information to be used by the terminal, and the identifier of the system information to be used by the terminal is generated and sent by the network device based on a bitmap manner.

9. A method for system information transmission, comprising:
receiving, by a network device, system information which is requested for by a terminal via a dedicated control signaling and to be used by the terminal; and
sending, by the network device, the system information to the terminal.

10. The method of claim 9, wherein receiving, by a network device, system information which is requested for by a terminal via a dedicated control signaling and to be used by the terminal comprises:
determining, by the network device, the system information of the network device via a connection re-establishment request message sent by the terminal, the connection re-establishment request message being further used by the terminal for requesting for re-establishing the connection with the network device.

11. The method of claim 9 or 10, wherein sending, by the network device, the system information to the terminal comprises:
sending, by the network device, a connection re-establishment message carrying the system information to the terminal, the connection re-establishment message being further used for indicating the terminal to re-establish the connection with the network device.

12. The method of claim 9, wherein receiving, by a network device, system information which is requested for by a terminal via a dedicated control signaling and to be used by the terminal comprises:
determining, by the network device, the system information of the network device via a connection re-establishment completion message sent by the terminal, the connection re-establishment completion message being further used for indicating that the terminal has re-established the connection with the network device.

13. The method of claim 9 or 12, wherein sending, by the network device, the system information to the terminal comprises:
sending, by the network device, a second reconfiguration message carrying the system information to the terminal, the second reconfiguration message being further used for indicating the terminal to modify the connection with the target network device after the terminal has established the connection with the target network device.

14. A device for system message transmission, comprising:
a memory having stored instructions thereon;
a processor configured to execute the instructions to implement the method of any one of claims 1-8.

15. A device for system information transmission, comprising:
a memory having stored instructions thereon;
a processor configured to execute the instructions to implement the method of any one of claims 9-13.
